# EUROPÄISCHE PATENTSCHRIFT

(11) **EP 3 267 283 B1**
(45) Veröffentlichungstag und Bekanntmachung des Hinweises auf die Patenterteilung: **26.12.2018**
(21) Anmeldenummer: 16178161.2
(22) Anmeldetag: 06.07.2016
(51) Int. Cl.: G06F 1/16, H02J 7/00, H04M 1/06

(54) **AUFNAHMEVORRICHTUNG FÜR EIN TRAGBARES ELEKTRONISCHES GERÄT**
HOLDER APPARATUS FOR A PORTABLE ELECTRONIC DEVICE
DISPOSITIF DE RECEPTION POUR UN APPAREIL ELECTRONIQUE PORTATIF

(43) Veröffentlichungstag der Anmeldung: 10.01.2018
(73) Patentinhaber: Siemens Aktiengesellschaft, 80333 München (DE)
(72) Erfinder: Jovy, Alexander, 76187 Karlsruhe (DE); Stein, Ulf, 92224 Amberg (DE)

(56) Entgegenhaltungen:
- DE-T2- 69 528 940
- US-A1- 2009 280 871
- US-A1- 2010 146 308
- US-A1- 2012 299 547
- US-A1- 2015 016 051

## Beschreibung

Die Erfindung betrifft eine Aufnahmevorrichtung für ein tragbares elektronisches Gerät, umfassend eine Grundplatte, eine Rückwand, eine erste Seitenwand und eine zweite Seitenwand, wobei die erste Seitenwand zusammen mit einem ersten Vorderteil zu einer ersten Ecke und die zweite Seitenwand zusammen mit einem zweiten Vorderteil zu einer zweiten Ecke angeordnet sind.

Im Sinne der Erfindung wird unter einem tragbaren elektronischen Gerät, insbesondere ein Notebook oder ein Tablet-PC verstanden.

Aus der europäischen Patentanmeldung EP 2 096 516 A2 ist eine Docking Station mit einem Schnellverschluss für ein mobiles elektronisches Gerät bekannt. Nachteilig an dem bekannten Stand der Technik ist das trotz eines vorhandenen Schnellverschlusses das Befestigen in der Docking Station doch noch mehrere Handgriffe benötigt.

Die US 2012/299547 A1 offenbart eine Ladevorrichtung für mobile Geräte beispielsweise Tablet PC's oder mobile Telefone. Nachteilig hieran ist, dass beim Einstecken des Gerätes in die Ladevorrichtung eine gewisse Sorgfalt angewendet werden muss.

Auch die US 2009/280871 A1 zeigt eine Ladeschale für ein mobiles Telefon.

Die DE 695 28 940 T2 offenbart ebenfalls eine Halterung für ein Funktelefon, wobei das Telefon mittels Federkraft in einem Verrastelement gehalten wird.

Es ist Aufgabe der vorliegenden Erfindung eine Aufnahmevorrichtung bereitzustellen, die eine einfache Handhabung und eine möglichst einhändige Bedienung ermöglicht, wobei eine sichere Kontaktierung gewährleistet sein soll.

Der erste Vorderteil und der zweite Vorderteil weisen jeweils einen zur Rückwand gerichteten ersten Bereich und einen zweiten Bereich auf, wobei der erste Bereich eine Gleitfläche aufweist, welche in einem ersten Winkel konisch zur Rückwand und der zweite Bereich eine Zwangsführungsfläche aufweist, welche in einem zweiten Winkel zur Rückwand angeordnet ist, wobei der erste Winkel größer ist als der zweite Winkel, wobei ein Übergang von der Gleitfläche zur Zwangsführungsfläche eine Nocke bildet, wobei auf der Rückwand zwei Gleitbahnen mit jeweils einem ersten Gleitbahnbereich und einen zweiten Gleitbahnbereich angeordnet sind, wobei ein weiterer Übergang von dem ersten Gleitbahnbereich zu dem zweiten Gleitbahnbereich eine weitere Nocke bildet, wobei für den Fall, dass das tragbare elektronische Gerät in die Aufnahmevorrichtung gesteckt wird, bewirken die Nocken, dass das tragbare elektronische Gerät von einer anfänglichen Gleitbewegung über die entsprechenden Gleitflächen bei Erreichung der Nocken zur Rückwand geneigt wird.

Durch die beschriebene Anordnung der Gleitflächen und Zwangsführungsflächen ist es möglich, das tragbare elektronische Gerät einhändig über der Aufnahmevorrichtung zu positionieren und leicht in die Aufnahmevorrichtung einzuschieben. Es ist darüber hinaus sogar möglich, einfach das tragbare elektronische Gerät einhändig über der Aufnahmevorrichtung zu positionieren und einfach loszulassen, denn über die in der Aufnahmevorrichtung angeordneten Bereiche, Gleitflächen und Zwangsführungsflächen und die auf das Gerät wirkende Schwerkraft wird das Gerät von alleine richtig positioniert. Durch eine anfängliche Gleitbewegung des tragbaren elektronischen Gerätes auf der Gleitfläche trifft es schließlich auf die durch den Übergang von der Gleitfläche zur Zwangsführungsfläche gebildete Nocke, welche dafür sorgt, dass das Gleiten des elektronischen Gerätes in ein Neigen übergeht. Unterstützt wird dieser Übergang von Gleiten in ein Neigen durch die weitere Nocke, welche durch den Übergang von dem ersten Gleitbahnbereich zu dem zweiten Gleitbahnbereich gebildet ist. Durch die Anordnung der Nocken, welche letztendlich für eine Zwangsführung des tragbaren elektronischen Gerätes sorgen, wird eine stufenweise Zentrierung des tragbaren elektronischen Gerätes ermöglicht.

Für die Kontaktierung ist auf der Grundplatte ein Kontaktelement mit einer Vielzahl von Kontaktstiften angeordnet, wobei das Kontaktelement zwischen einem ersten Vorzentrierungsdom und einem zweiten Vorzentrierungsdom angeordnet ist. Die Vorzentrierung durch die Vorzentrierungsdome ist für die sichere Positionierung des elektronischen Gerätes mit ebenfalls einen Gegenkontaktelement auf das Kontaktelement der Aufnahmevorrichtung vorgesehen. Rutscht das elektronische Gerät in Richtung des Kontaktelementes, so wird es durch die Vorzentrierungsdome in die richtige Richtung geführt, letztendlich befinden sich auf dem Kontaktelement noch zusätzliche Steckkontaktdome die für eine Schlusszentrierung des Gegenkontaktelementes des tragbaren elektronischen Gerätes auf das Kontaktelement der Aufnahmevorrichtung sorgen.

Die eingangs genannte Aufgabe wird insbesondere durch eine Kombination der bisher aufgezeigten Merkmale mit einem in der Rückwand angeordnetem Magnetelement, welches mit einem Gegenmagnetelement im tragbaren elektronischen Gerat zusammenwirkt, wobei das Magnetelement von einem Kragen umgeben ist, welcher derart ausgebildet ist, dass er bei eingestecktem tragbaren elektronischen Gerät formschlüssig mit einer Ausnehmung im eingesteckten tragbaren elektronischem Gerät verrastet, gelöst. Somit entsteht eine kraft- und formschlüssige Verbindung zwischen tragbaren elektronischem Gerät und Aufnahmevorrichtung.

In einer weiteren Ausgestaltung sind die Seitenwände derart zueinander angeordnet, dass diese konisch auseinanderlaufen, wodurch ein trichterförmiger Fangbereich für das einzusteckende tragbare elektronische Gerät gebildet ist. Ein trichterförmiger Fangbereich bzw. ein großer Fangbereich vereinfacht ein einhändiges Einstecken in die Aufnahmevorrichtung nochmals. In einem Extremfall könnte man sogar das elektronische Gerät einfach in die Aufnahmevorrichtung einwerfen und durch den trichterförmigen großen Fangbereich und im Wesentlichen durch die Gleit- und Zwangsführungsflächen wird das elektronische Gerät in der Aufnahmevorrichtung sich selbständig positionieren und letztendlich einen Kontakt mit einem in der Aufnahmevorrichtung angeordneten Kontaktelement eingehen.

Durch den Einsatz beispielsweise zweier Magnete in der Rückwand der Aufnahmevorrichtung (links und rechts) sowie durch den Einsatz von beispielsweise magnetischen Stahlscheiben in dem tragbaren elektronischen Gerät, welche in einer Vertiefung eingelassen sind und wird zusätzlich für eine formschlüssige Verbindung des tragbaren elektronischen Gerätes mit der Aufnahmevorrichtung gesorgt.

In einer weiter optimierten Ausgestaltung ist in der Rückwand ein Schaltmittel angeordnet, welches derart ausgestaltet ist, dass das Schaltmittel aktiviert wird, wenn der Kragen in der Ausnehmung verrastet ist. Weiterhin ist es von Vorteil, wenn das Kontaktelement federunterstützte Kontaktstifte aufweist. Zusätzlich ist es vorteilhaft, wenn ein Freigabemittel vorhanden ist, welches mit dem Schaltmittel in Verbindung steht und ausgestaltet ist, eine Datenübertragung über das Kontaktelement zu dem tragbaren elektronischen Gerät erst freizugeben, wenn das Schaltmittel aktiviert ist.

Durch die Kombination von mechanischem Gesperre, in Form eines Formschlusses, den Einsatz von Magnetelementen und Gegenmagnetelementen, dem Kontaktelement, insbesondere ausgeführt als sogenannte Pogo-Pins, und optionalen Schaltmitteln, insbesondere ausgeführt als Mikroschaltern zur kontrollierten Kontaktunterbrechung, ist die Aufnahmevorrichtung in dieser Ausprägungsform bezüglich des sicheren Kontaktierens zwischen dem elektronischen Gerät und der Aufnahmevorrichtung besonders robust ausgestaltet. Zusätzliche Möglichkeiten würden sich durch den Einsatz von Elektro-Magneten ergeben, welche nach einem letztendlichen Positionieren ein unerwünschtes Entnehmen des tragbaren elektronischen Gerätes ausschließen würden.

Durch die form- und kraftschlüssige Magnetverriegelung hat nun ein Bediener des elektronischen Gerätes während der Bedienung die Sicherheit das die Kontaktierung von dem elektronischen Gerät zu der Aufnahmevorrichtung immer gewährleistet ist, welches für eine Datenübertragung zu einer übergeordneten Automatisierungskomponente oder Serverkomponente von großer Wichtigkeit ist.

Eine anschließende Entriegelung bzw. Entnahme des elektronischen Gerätes aus der Aufnahmevorrichtung würde sich wie folgt gestalten:

### 1. Stufe

Das elektronische Gerät leicht nach vorne Ziehen, wodurch die Magnetverriegelung gelöst wird.

### 2. Stufe

Das elektronische Gerät kann nun nach oben herausgezogen werden, wodurch die Kontaktierung unterbrochen wird.

### 3. Stufe

Da nun die Schaltmittel nicht mehr betätigt sind und das Gerät sicher und gleichmäßig von den Kontaktelementen gelöst wird, ergibt sich kein Systemabsturz oder Datenverlust.

Die Zeichnung zeigt ein Ausführungsbeispiel der Erfindung. Es zeigen:
- FIG 1: eine perspektivische Ansicht einer Aufnahmevorrichtung für ein tragbares elektronisches Gerät,
- FIG 2: die Aufnahmevorrichtung in einer Schnittdarstellung,
- FIG 3: die Aufnahmevorrichtung in einer Längsschnittdarstellung und
- FIG 4: die Aufnahmevorrichtung mit dem elektronischen Gerät.

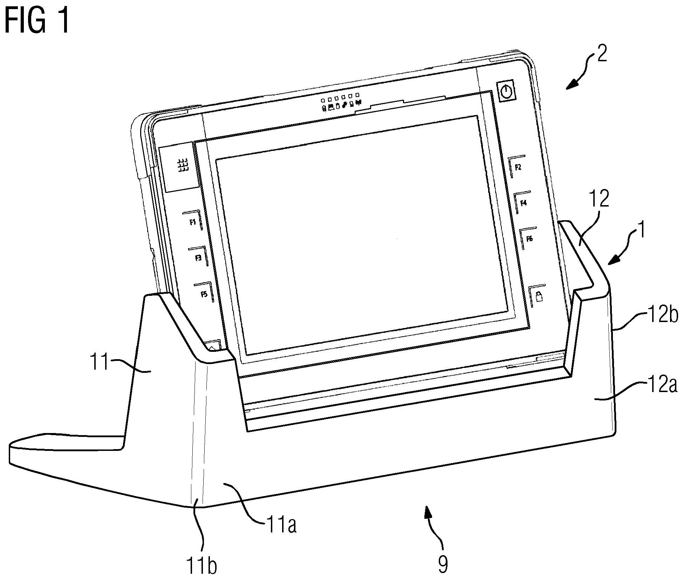

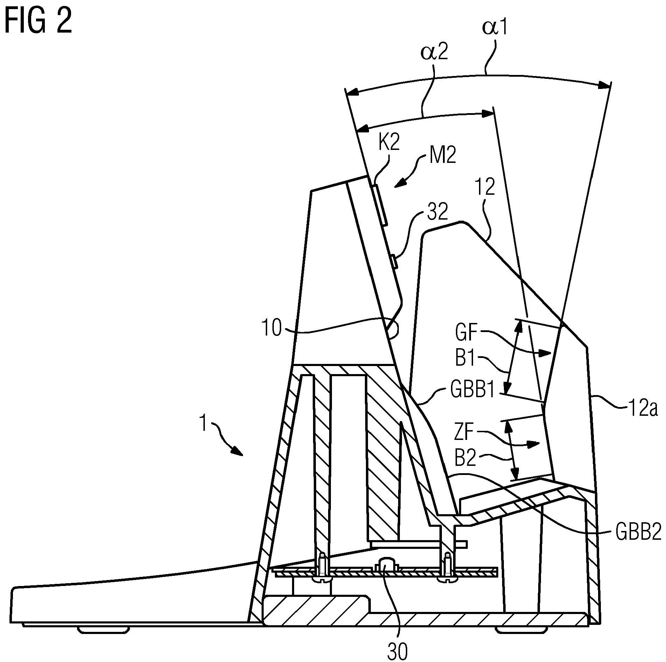

Gemäß FIG 1 ist eine Aufnahmevorrichtung 1 für ein tragbares elektronisches Gerät 2 dargestellt. Durch die Anordnung einer Grundplatte 9, einer Rückwand 10 (siehe hierzu FIG 2) einer ersten Seitenwand 11 und einer zweiten Seitenwand 12, wobei die erste Seitenwand 11 zusammen mit einem ersten Vorderteil 11a zu einer ersten Ecke 11b und die zweiten Seitenwand 12 zusammen mit einem zweiten Vorderteil 12a zu einer zweiten Ecke 12b angeordnet sind, wird durch die Aufnahmevorrichtung 1 ein großer Fangbereich F für ein sicheres Andocken des elektronischen Gerätes 2 in der Aufnahmevorrichtung 1 bereitgestellt.

Die FIG 2 zeigt in einer Querschnittdarstellung der Aufnahmevorrichtung 1 die mechanischen Ausgestaltungsmerkmale innerhalb der Aufnahmevorrichtung 1, welche ein Gleiten und ein sicheres Zwangsführen eines einzusteckenden elektronischen Gerätes 2 in die Aufnahmevorrichtung 1 ermöglichen. Der erste Vorderteil 11a und der zweite Vorderteil 12a sind jeweils in einen zur Rückwand 10 gerichteten ersten Bereich B1 und einen zweiten Bereich B2 aufgeteilt. Durch die Darstellung der Aufnahmevorrichtung 1 in der Schnittdarstellung ist die Sicht lediglich auf den zweiten Vorderteil 12a gerichtet.

Der erste Bereich B1 weist eine Gleitfläche GF auf, welche in einem ersten Winkel α1 konisch zur Rückwand 10 und der zweite Bereich B2 weist eine Zwangsführungsfläche ZF auf, welche in einem zweiten Winkel α2 zur Rückwand angeordnet ist, wobei der erste Winkel α1 größer ist als der zweite Winkel α1.

Ein Übergang von der Gleitfläche GF zur Zwangsführungsfläche ZF bildet eine Nocke, wobei auf der Rückwand zwei Gleitbahnen GB1,GB2 mit jeweils einem ersten Gleitbahnbereich GBB1 und einem zweiten Gleitbahnbereich GBB2 angeordnet sind.

Ein weiterer Übergang von dem ersten Gleitbahnbereich GBB1 zu dem zweiten Gleitbahnbereich GBB2 bildet eine weitere Nocke. Die Nocke und die weitere Nocke sind derart angeordnet, dass für den Fall, dass das tragbare elektronische Gerät 2 in die Aufnahmevorrichtung 1 gesteckt wird, die Nocken dafür sorgen, dass das tragbare elektronische Gerät von einer anfänglichen Gleitbewegung über die entsprechenden Gleitflächen GF bei Erreichen der Nocken zur Rückwand geneigt wird.

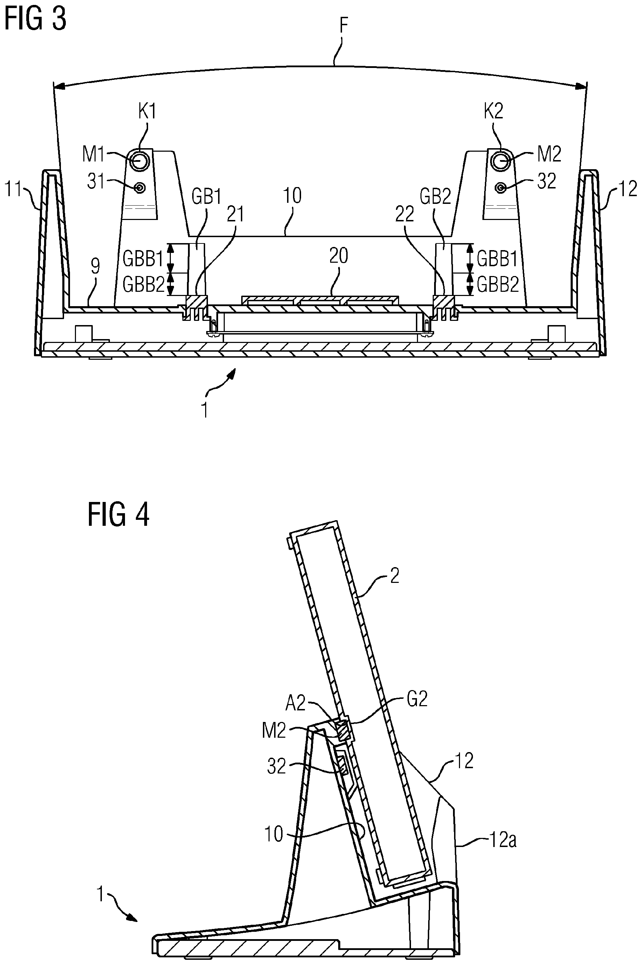

Mit der FIG 3 wird der Fangbereich F der Aufnahmevorrichtung 1 verdeutlicht. Die erste Seitenwand 11 und die zweite Seitenwand 12 sind derart angeordnet, dass diese konisch auseinanderlaufen, wodurch sich ein trichterförmiger Fangbereich F für das einzusteckende tragbare elektronische Gerät 2 bildet. Auf der Grundplatte 9 ist ein Kontaktelement 20 mit einer Vielzahl von Kontaktstiften angeordnet, wobei das Kontaktelement 20 zwischen einem ersten Vorzentrierungsdom 21 und einem zweiten Vorzentrierungsdom 22 angeordnet ist. In der Rückwand 10 ist ein erstes Magnetelement M1 und ein zweites Magnetelement M2 angeordnet, welche mit einem Gegenmagnetelement G2 (siehe FIG 4) zusammenwirken. Das erste Magnetelement M1 ist von einem ersten Kragen K1 und das zweite Magnetelement M2 ist von einem zweiten Kragen K2 umgeben, wobei die beiden Kragen K1,K2 derart ausgebildet sind, dass sie bei einem eingesteckten tragbaren elektronischen Gerät 2 formschlüssig mit der jeweiligen Ausnehmung A2 im eingesteckten tragbaren elektronischen Gerät 2 verrasten. Mit Hilfe der Magnetelemente M1,M2 und der Kragen K1,K2 entsteht eine kraft- und formschlüssige feste Verriegelung in der Aufnahmevorrichtung 1 für das tragbare elektronische Gerät 2.

In der Rückwand 10 ist ein erstes Schaltmittel 31 und ein zweites Schaltmittel 32 angeordnet, welche derart ausgestaltet sind, dass das erste Schaltmittel 31 und das zweite Schaltmittel 32 aktiviert wird, wenn der erste Kragen K1 und der zweite Kragen K2 in der jeweiligen Ausnehmung A2 des elektronischen Gerätes 2 verrastet ist.

Mit Bezug auf FIG 2 ist ein Freigabemittel 30 vorhanden, welches mit dem ersten Schaltmittel 31 und dem zweiten Schaltmittel 32 in Verbindung steht und ausgestaltet ist, eine Datenübertragung über das Kontaktelement 20 zu den tragbaren elektronischen Gerät 2 erst freizugeben, wenn das Schaltmittel 31,32 aktiviert ist.

Gemäß der FIG 4 ist in einer Schnittdarstellung der Aufnahmevorrichtung 1 und des tragbaren elektronischen Gerätes 2 dargestellt, wie das tragbare elektronische Gerät 2 in der Aufnahmevorrichtung 1 sicher angedockt ist. Mit Blick auf das zweite Magnetelement M2 und der Ausnehmung A1 wird verdeutlicht, dass an dieser Stelle eine kraft- und formschlüssige Verbindung zwischen der Aufnahmevorrichtung 1 und dem tragbaren elektronischen Gerät 2 herrscht. Ein in dem tragbaren elektronischen Gerät angeordnetes Gegenmagnetelement G2 unterstützt diese kraft- und formschlüssige Verbindung.

## Patentansprüche

1. Aufnahmevorrichtung (1) für ein tragbares elektronisches Gerät (2), umfassend
eine Grundplatte (9),
eine Rückwand (10),
eine erste Seitenwand (11) und
eine zweite Seitenwand (12),
wobei die erste Seitenwand (11) zusammen mit einem ersten Vorderteil (11a) zu einer ersten Ecke (11b) und die zweite Seitenwand (12) zusammen mit einem zweiten Vorderteil (12a) zu einer zweiten Ecke (12b) angeordnet sind,
wobei der erste Vorderteil (11a) und der zweite Vorderteil (12a) jeweils einen zur Rückwand gerichteten ersten Bereich (B1) und einen zweiten Bereich (B2) aufweist, wobei der erste Bereich (B1) eine Gleitfläche (GF) aufweist, welche in einem ersten Winkel (α1) konisch zur Rückwand (10) und der zweite Bereich (B2) eine Zwangsführungsfläche (ZF) aufweist, welche in einem zweiten Winkel (α2) zur Rückwand (10) angeordnet ist, wobei der erste Winkel (α1) größer ist als der zweite Winkel (α2), wobei ein Übergang von der Gleitfläche (GF) zur Zwangsführungsfläche (ZF) eine Nocke bildet, wobei auf der Rückwand (10) zwei Gleitbahnen (GB1,GB2) mit jeweils einem ersten Gleitbahnbereich (GBB1) und einem zweiten Gleitbahnbereich (GBB2) angeordnet sind, wobei ein weiterer Übergang von dem ersten Gleitbahnbereich (GBB1) zu dem zweiten Gleitbahnbereich (GBB2) eine weitere Nocke bildet, wobei für den Fall, dass das tragbare elektronische Gerät (2) in die Aufnahmevorrichtung (1) gesteckt wird, die Nocken bewirken, dass das tragbare elektronische Gerät (2) von einer anfänglichen Gleitbewegung über die entsprechenden Gleit-Flächen (GF) bei Erreichen der Nocken zur Rückwand (10) geneigt wird, wobei auf der Grundplatte (9) ein Kontaktelement (20) mit einer Vielzahl von Kontaktstiften angeordnet ist, wobei das Kontaktelement (20) zwischen einem ersten Vorzentrierungsdom (21) und einem zweiten Vorzentrierungsdom (22) angeordnet ist, wobei in der Rückwand (10) ein Magnetelement (M1,M2) angeordnet ist, welches mit einem Gegenmagnetelement (G2) im tragbaren elektronischen Gerät (2) zusammenwirkt, wobei das Magnetelement (M1,M2) von einem Kragen (K1,K2) umgeben ist, welcher derart ausgebildet ist, dass er bei eingestecktem tragbaren elektronischem Gerät (2) formschlüssig mit einer Ausnehmung (A2) im eingestecktem tragbaren elektronischem Gerät (2) verrastet.

2. Aufnahmevorrichtung (1) nach Anspruch 1, wobei die Seitenwände (11,12) derart zueinander angeordnet sind, dass diese konisch auseinanderlaufen, wodurch ein trichterförmiger Fangbereich (F) für das einzusteckende tragbare elektronische Gerät (2) gebildet wird.

3. Aufnahmevorrichtung (1) nach Anspruch 1 oder 2, wobei in der Rückwand (10) ein Schaltmittel (31,32) angeordnet ist, welches derart ausgestaltet ist, dass das Schaltmittel (31,32) aktiviert wird, wenn der Kragen (K1,K2) in der Ausnehmung verrastet ist.

4. Aufnahmevorrichtung (1) nach einem der Ansprüche 1 bis 3, wobei das Kontaktelement (20) federunterstützte Kontaktstifte aufweist.

5. Aufnahmevorrichtung (1) nach Anspruch 3 oder 4, wobei ein Freigabemittel (30) vorhanden ist, welches mit dem Schaltmittel (31,32) in Verbindung steht und ausgestaltet ist eine Datenübertragung über das Kontaktelement (20) zu dem tragbaren elektronischen Gerät (2) erst freizugeben, wenn das Schaltmittel (31,32) aktiviert ist.

## Claims

1. Holder apparatus (1) for a portable electronic device (2), comprising
a base plate (9),
a rear wall (10),
a first side wall (11) and
a second side wall (12),
wherein the first side wall (11) is arranged together with a first front part (11a) to form a first corner (11b) and the second side wall (12) is arranged together with a second front part (12a) to form a second corner (12b),
wherein the first front part (11a) and the second front part (12a) respectively have a first region (B1) aligned to the rear wall and a second region (B2), wherein the first region (B1) has a sliding surface (GF) which is arranged at a first angle (α1) conically to the rear wall (10) and the second region (B2) has a forced guidance surface (ZF) which is arranged at a second angle (α2) to the rear wall (10), wherein the first angle (α1) is larger than the second angle (α2), wherein a transition from the sliding surface (GF) to the forced guidance surface (ZF) forms a cam, wherein two sliding tracks (GB1, GB2) each having a first sliding track region (GBB1) and a second sliding track region (GBB2) are arranged on the rear wall (10), wherein a further transition from the first sliding track region (GBB1) to the second sliding track region (GBB2) forms a further cam, wherein in the event that the portable electronic device (2) is inserted into the holder apparatus (1), the cams cause the portable electronic device (2) to be inclined to the rear wall (10) from an initial sliding movement via the corresponding sliding surfaces (GF) on reaching the cams, wherein a contact element (20) having a plurality of contact pins is arranged on the base plate (9), wherein the contact element (20) is arranged between a first pre-centring dome (21) and a second pre-centring dome (22), wherein a magnetic element (M1, M2) is arranged in the rear wall (10) and interacts with a counter magnetic element (G2) in the portable electronic device (2), wherein the magnetic element (M1, M2) is surrounded by a collar (K1, K2) which is designed such that when the portable electronic device (2) is inserted it latches in form-fit manner with a recess (A2) in the inserted portable electronic device (2).

2. Holder apparatus (1) according to claim 1, wherein the side walls (11, 12) are arranged in respect of one another such that they conically diverge, as a result of which a funnel-shaped capture region (F) is formed for the portable electronic device (2) to be inserted.

3. Holder apparatus (1) according to claim 1 or 2, wherein a switching means (31, 32) is arranged in the rear wall (10) and is configured such that the switching means (31, 32) is activated when the collar (K1, K2) is latched in the recess.

4. Holder apparatus (1) according to one of claims 1 to 3, wherein the contact element (20) has spring-assisted contact pins.

5. Holder apparatus (1) according to claim 3 or 4, wherein a release means (30) is present which is connected to the switching means (31, 32) and is configured not to enable a data transfer via the contact element (20) to the portable electronic device (2) until the switching means (31, 32) is activated.

## Revendications

1. Dispositif ( 1 ) de réception pour un appareil ( 2 ) électronique portatif, comprenant
une plaque ( 9 ) de base,
une paroi ( 10 ) arrière,
une première paroi ( 11 ) latérale et
une deuxième paroi ( 12 ) latérale,
dans lequel la première paroi ( 11 ) latérale est disposée, ensemble avec une première partie ( 11a ) avant, à un premier coin ( 11b ) et la deuxième partie ( 12a ) latérale, ensemble avec une deuxième partie ( 12a ) avant, à un deuxième coin ( 12b ),
dans lequel la première partie ( 11a ) avant et la deuxième partie ( 12a ) avant ont chacune une première région ( B1 ) et une deuxième région ( B2 ) dirigée vers la paroi arrière, la première région ( B1 ) ayant une surface ( GF ) de glissement, qui fait un premier angle ( α1 ) coniquement avec la paroi ( 10 ) arrière et la deuxième région ( B2 ) a une surface ( ZF ) de guidage forcé, qui fait un deuxième angle ( α2 ) avec la paroi ( 10 ) arrière, le premier angle ( α1 ) étant plus grand que le deuxième angle ( α2 ), une transition de la surface ( GF ) de glissement à la surface ( ZF ) de guidage forcé formant une saillie, dans lequel, sur la paroi ( 10 ) arrière, sont disposées deux pistes ( GB1, GB2 ) de glissement, ayant chacune une première région ( GBB1 ) de piste de glissement et une deuxième région ( GBB2 ) de piste de glissement, une autre transition de la première région ( GBB1 ) de piste de glissement à la deuxième région ( GBB2 ) de piste de glissement formant une autre saillie, dans lequel, dans le cas où l'appareil ( 2 ) électronique portatif est enfiché dans le dispositif ( 1 ) de réception, les saillies font que l'appareil ( 2 ) électronique portatif s'incline, par rapport à la paroi ( 10 ) arrière, par un mouvement de glissement initial sur les surfaces ( GF ) de glissement correspondantes, lorsqu'il atteint les saillies,
dans lequel, sur la plaque ( 9 ) de base, est monté un élément ( 20 ) de contact ayant une pluralité de broches de contact, l'élément ( 20 ) de contact étant disposé entre un premier dôme ( 21 ) de précentrage et un deuxième dôme ( 22 ) de précentrage, dans lequel, dans la paroi ( 10 ) arrière est disposé un élément ( M1, M2 ) d'aimant, qui coopère avec un élément ( G2 ) d'aimant antagoniste dans l'appareil ( 2 ) électronique portatif, l'élément ( M1, M2 ) d'aimant étant entouré d'un collet ( K1, K2 ) constitué de manière à s'encliqueter, lorsque l'appareil ( 2 ) électronique portatif est enfiché, à complémentarité de forme avec un évidement ( A2 ) de l'appareil ( 2 ) électronique portatif enfiché.

2. Dispositif ( 1 ) de réception suivant la revendication 1, dans lequel les parois ( 11, 12 ) latérales sont disposées l'une par rapport à l'autre, de manière à s'écarter coniquement, grâce à quoi il est formé une région ( F ) en forme d'entonnoir de capture de l'appareil ( 2 ) électronique portatif, qui s'enfiche.

3. Dispositif ( 1 ) de réception suivant la revendication 1 ou 2, dans lequel, dans la paroi ( 10 ) arrière, est monté un moyen ( 31, 32 ) de commutation, conformé de manière à ce que le moyen ( 31, 32 ) de commutation soit activé, lorsque le collet ( K1, K2 ) est encliqueté dans l'évidement.

4. Dispositif ( 1 ) de réception suivant l'une des revendications 1 à 3, dans lequel l'élément ( 20 ) de contact a des broches de contact assistées par des ressorts.

5. Dispositif ( 1 ) de réception suivant la revendication 3 ou 4, dans lequel il y a un moyen ( 30 ) de libération, qui est en liaison avec le moyen ( 31, 32 ) de commutation et qui est conformé pour ne libérer une transmission de données, par l'intermédiaire de l'élément ( 20 ) de contact, à l'appareil ( 2 ) électronique portatif, que si le moyen ( 31, 32 ) de commutation est activé.
